# EUROPÄISCHE PATENTSCHRIFT

(11) **EP 3 954 876 B1**
(45) Veröffentlichungstag und Bekanntmachung des Hinweises auf die Patenterteilung: **04.12.2024**
(21) Anmeldenummer: 21195944.0
(22) Anmeldetag: 12.04.2018
(51) Int. Cl.: F01D 17/16, F01D 25/24

(54) **DÜSENRING FÜR EINEN ABGASTURBOLADER**
NOZZLE RING FOR AN EXHAUST TURBOCHARGER
COURONNE DIRECTRICE POUR UN TURBOCOMPRESSEUR À GAZ D'ÉCHAPPEMENT

(30) Priorität: 13.04.2017 DE 102017108057
(43) Veröffentlichungstag der Anmeldung: 16.02.2022
(62) Teilanmeldung aus: 18718134.2
(73) Patentinhaber: Turbo Systems Switzerland Ltd., 5400 Baden (CH)
(72) Erfinder: MORATH, Christoph, 79862 Höchenschwand (DE); GWEHENBERGER, Tobias, 4310 Rheinfelden (CH)
(74) Vertreter: Zimmermann & Partner Patentanwälte mbB

(56) Entgegenhaltungen:
- EP-A1- 0 802 305
- EP-A1- 2 455 590
- EP-A1- 2 778 349
- DE-A1- 10 048 105
- DE-A1- 4 238 550
- GB-A- 2 271 814
- JP-A- 2003 227 344
- US-A1- 2004 025 504
- US-A1- 2006 037 317
- US-A1- 2016 245 160

## Beschreibung

### TECHNISCHES GEBIET

Die Erfindung bezieht sich auf das Gebiet der Abgasturbolader für aufgeladene Brennkraftmaschinen. Insbesondere betrifft die Erfindung einen Düsenring für eine Radialturbine eines solchen Abgasturboladers

### TECHNISCHER HINTERGRUND

Für die Leistungssteigerung einer Brennkraftmaschine werden heutzutage standardmäßig Abgasturbolader eingesetzt, mit einer Turbine im Abgastrakt der Verbrennungskraftmaschine und mit einem der Verbrennungskraftmaschine vorgelagerten Verdichter. Die Abgase der Brennkraftmaschine werden dabei in der Turbine entspannt. Die dabei gewonnene Arbeit wird mittels einer Welle auf den Verdichter übertragen, welcher die der Brennkraftmaschine zugeführte Luft verdichtet. Durch die Verwendung der Energie der Abgase zur Verdichtung der dem Verbrennungsprozess in der Brennkraftmaschine zugeführten Luft, können der Verbrennungsprozess und der Wirkungsgrad der Brennkraftmaschine optimiert werden.

Die kinetische Energie des Abgases wird dazu verwendet, um den Rotor des Turboladers anzutreiben. Um einen sicheren Betrieb gewährleisten zu können muss der Abgasstrahl gezielt auf die Turbinenwelle geführt werden. Zu diesem Zweck sowie zur Ermöglichung eines "Matchings" des Turboladers für unterschiedliche Anwendungen, wird bei radialen Turbinenstufen am Austritt des Strömungskanals vor der Turbinenwelle ein Düsenring eingebaut.

In Abhängigkeit von der verwendeten Turbine und entsprechend den konkreten Einsatzbedingungen kann das Arbeitsmedium, z. B. die Abgase, einen großen Temperaturgradienten aufweisen. Daher werden Düsenringe von Abgasturboladern durch wechselnde Betriebsbedingungen, d. h. Erhöhung oder Absenkung von Druck und Temperatur des Arbeitsmediums, typischerweise hoch beansprucht und können relativ starken Temperaturdehnungen unterworfen sein.

Die Befestigung von Düsenringen erfolgt häufig durch einfaches Verklemmen im Gehäuse der Abgasturbine. Beispielsweise, kann der Düsenring in Position gehalten werden in dem er axial geklemmt wird, im Regelfall zwischen Turbinengehäuse und Lagergehäuse. Ferner kann gegebenenfalls ein separater Hitzeschild verbaut werden insofern der Wärmeeintrag durch das Abgas in das Lagergehäuse zu hoch ist oder dem Abgas zu viel Energie durch Wärmeeintrag in angrenzenden Komponenten entzogen wird. Vereinzelt ist es notwendig den Düsenring auch zur Stellung des Turbinengehäuses auszurichten, dies wird dann durch Positionierkomponenten wie z.B. Nutensteine oder Stiftverbindungen realisiert.

Zum Stand der Technik wird auf die Dokumente DE 100 48 105 A1, EP 0 802 305 A1, GB 2 271 814 A, US 2004/025504 A1, US 2016/245160 A1, EP 2 455 590 A1, US 2006/037317 A1, DE 42 38 550 A1, JP 2003 227344 A und EP 2 778 349 A1 verwiesen.

### DARSTELLUNG DES TECHNISCHEN PROBLEMS

Es hat sich herausgestellt, dass bedingt durch die Anforderung, unterschiedlich große Turbinenwellen/Turbinenstufen in einem Rotorblock verwenden/verbauen zu können deren Turbinenköpfe sich stark in der Größe unterscheiden und auch unterschiedliche Turbinenrückwand-Geometrien aufweisen, ein neues Düsenringkonzept erforderlich ist.

Insbesondere weisen die aus dem Stand der Technik bekannten Befestigungs- und Anbaukonzepte von Düsenringen, insbesondere mittels einer axialen Klemmung zwischen Turbinengehäuse, Lagergehäuse und einem Hitzeschild, dahingehend Nachteile auf, dass die Positionierung der Düsenringschaufeln sowie das Einbringen von unterschiedlichen Turbinenrückwand-Geometrien nicht unabhängig vom verwendeten Klemmverbund sind.

Daher liegt der vorliegenden Erfindung die Aufgabe zu Grunde einen verbesserten Düsenring bereitzustellen, der die aus dem Stand der Technik bekannten Nachteile zumindest teilweise, bzw. größtenteils oder sogar vollständig überwindet.

### ZUSAMMENFASSUNG DER ERFINDUNG

Zur Lösung der obengenannten Aufgabe wird ein Düsenring für eine Radialturbine gemäß dem unabhängigen Anspruch 1 bereitgestellt. Weitere Aspekte, Vorteile und Merkmale der vorliegenden Erfindung sind den abhängigen Patentansprüchen, der Beschreibung und den beiliegenden Figuren zu entnehmen.

Gemäß einem Aspekt der Erfindung wird ein Düsenring für eine Radialturbine bereitgestellt. Der Düsenring umfasst einen rotationssymmetrischen, scheibenförmigen Grundkörper mit einer zentralen Öffnung zum Durchführen einer Welle. Ferner umfasst der Düsenring Leitschaufeln, die in Umfangsrichtung in einem radial äußeren Bereich des Grundkörpers angeordnet und ausgebildet sind um Abgase auf Laufschaufeln eines Turbinenrads zu leiten. Die Leitschaufeln erstrecken sich vom Grundkörper in axialer Richtung. Der Grundkörper des Düsenrings ist ausgebildet um im montierten Zustand ein Hitzeschild zwischen einem Lagerraum eines Lagergehäuses und einem Turbinenraum zu bilden. Eine Lagergehäuseseite des Grundkörpers umfasst eine oder mehrere Ausnehmungen, um im montierten Zustand des Düsenrings einen oder mehrere luftgefüllte Isolationsräume zu bilden. Der Düsenring umfasst einen Befestigungsflansch, der in einem radial inneren Bereich des Grundkörpers angeordnet ist. Der Befestigungsflansch weist eine Kontaktfläche zur Auflage auf einer korrespondierenden Kontaktfläche des Lagergehäuses auf. Der Befestigungsflansch umfasst eine oder mehrere in Umfangsrichtung angeordnete Bohrungen zur Aufnahme von einem oder mehreren Befestigungsmitteln, um den Düsenring am Lagergehäuse zu montieren. Der scheibenförmige Grundkörper des Düsenrings erstreckt sich von der zentralen Öffnung radial nach außen bis zum radial äußeren Bereich in dem die Leitschaufeln angeordnet sind. Der radial äußere Bereich umfasst die Ausnehmungen. Die Leitschaufeln sind im Bereich der Ausnehmungen integral mit dem scheibenförmigen Grundkörper ausgebildet.

Somit wird vorteilhafterweise ein Düsenring bereitgestellt, der ein Befestigungs- und Anbaukonzept ermöglicht, mit welchem die Positionierung der Düsenringschaufeln sowie das Einbringen von unterschiedlichen Turbinenrückwand-Geometrien unabhängig vom verwendeten Klemmverbund und/oder einer bestehenden Heisszentrierung/Abdichtung ist/sind.

Zudem wird vorteilhafterweise ein Düsenring mit integriertem Hitzeschild bereitgestellt, so dass sich die Anzahl an Schnittstellen/Fugen verringert. Ferner wird eine Freimachung/Freistellung der Rückwandgeometrie der Turbinenwelle ermöglicht da diese im Düsenring integriert ist, so dass keine unterschiedlichen Lagergehäusevarianten notwendig sind. Darüber hinaus wird ein Düsenring bereitgestellt, dessen Fixierung vorteilhafterweise außerhalb des Klemmverbundes "Lagergehäuse/Turbinengehäuse" erfolgen kann, beispielsweise durch Befestigung mittels temperaturbeständiger Schrauben am Lagergehäuse.

Ferner, ermöglicht der hierin beschriebene Düsenring eine verbesserte Verbindung, insbesondere hinsichtlich Verformung (unter Temperatureinfluss) und Gasdichtheit, da der Düsenring vorteilhafterweise axial wie eine Tellerfeder leicht am Lagergehäuse vorgespannt werden kann. Somit kann durch die Verwendung des hierin beschriebenen Düsenrings vorteilhafterweise eine zusätzliche "Containment"-Schnittstelle vermieden werden. Darüber hinaus kann vorteilhafterweise durch die Verwendung des hierin beschriebenen Düsenrings eine zusätzliche Schnittstelle, die die Gasdichtheit nach außen beeinflusst vermieden werden.

Ferner sei angemerkt, dass bei der Verwendung des hierin beschriebenen Düsenrings, die Skalierung des Turbinenkopfes nicht den Klemmverbund/ die Heißzentrierung beeinflusst. Die maximale Skalierung wird durch Dimensionierung des Lagergehäuses definiert.

Darüber hinaus kann der hierin beschriebenen Düsenring vorteilhafter Weise in einem zentralen Bereich um die Turbinenwelle herum an dem Lagergehäuse befestigt werden, so dass eine thermische Ausdehnung des Düsenrings durch eine relativ weit Innen liegende Befestigung vorteilhafterweise wenig beeinflusst wird. Ein weiterer Vorteil des hierin beschriebenen Düsenrings besteht darin, dass die Befestigungselemente für den Düsenring nicht im Bereich der Hauptströmung liegen.

Gemäß einem weiteren Aspekt der Erfindung wird ein Abgasturbolader mit einem Düsenring gemäß einer der hierin beschrieben Ausführungsformen bereitgestellt, so dass vorteilhafterweise ein verbesserter Abgasturbolader bereitgestellt werden kann.

Der Abgasturbolader umfasst ein Turbinengehäuse, eine in einem Lagergehäuse gelagerte Welle, auf der ein Turbinenrad mit Laufschaufeln angeordnet ist. Ferner umfasst der Abgasturbolader einen Einströmkanal für Abgase, der im Turbinengehäuse, stromauf des Turbinenrades ausgebildet ist. Des Weiteren umfasst der Abgasturbolader einen Düsenring gemäß einer der hierin beschrieben Ausführungsformen, wobei der Düsenring derart ausgelegt ist, dass der Düsenring im montierten Zustand zwischen dem Lagergehäuse und dem Turbinengehäuse des Abgasturboladers axial gehalten wird. Der Düsenring ist über den Befestigungsflansch mittels hitzebeständiger Befestigungsmittel an dem Lagergehäuse befestigt.

### KURZBESCHREIBUNG DER FIGUREN

Im Weiteren soll die Erfindung anhand von in Figuren dargestellten Ausführungsbeispielen erläutert werden, aus denen sich weitere Vorteile und Abwandlungen ergeben. Hierbei zeigt:
- Figur 1: eine schematische isometrische Ansicht eines Düsenrings gemäß hierin beschriebenen Ausführungsformen in einem montierten Zustand mit einem Turbinenrad;

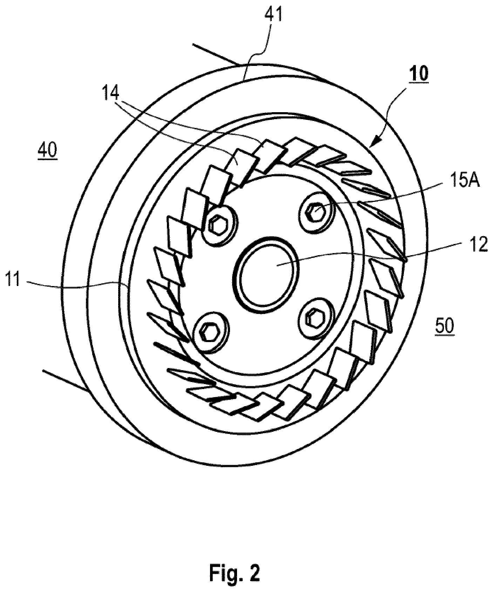

- Figur 2: eine schematische isometrische Ansicht eines Düsenrings gemäß hierin beschriebenen Ausführungsformen in einem montierten Zustand ohne Turbinenrad;
- Figur 3: eine schematische isometrische Ansicht einer Lagergehäuseseite eines Düsenrings gemäß hierin beschriebenen Ausführungsformen;
- Figur 4: eine schematische isometrische Ansicht einer Lagergehäuseseite eines Düsenrings mit einer Ausnehmung gemäß weiteren hierin beschriebenen Ausführungsformen;
- Figur 5: eine schematische isometrische Ansicht einer Lagergehäuseseite eines Düsenrings umfassend eine Ausnehmung mit sich in radialer Richtung erstreckende Rippen gemäß weiteren hierin beschriebenen Ausführungsformen; und
- Figur 6: eine schematische Schnittansicht eines Ausschnitts eines Abgasturboladers gemäß hierin beschriebenen Ausführungsformen.

### DETAILLIERTE BESCHREIBUNG DER FIGUREN

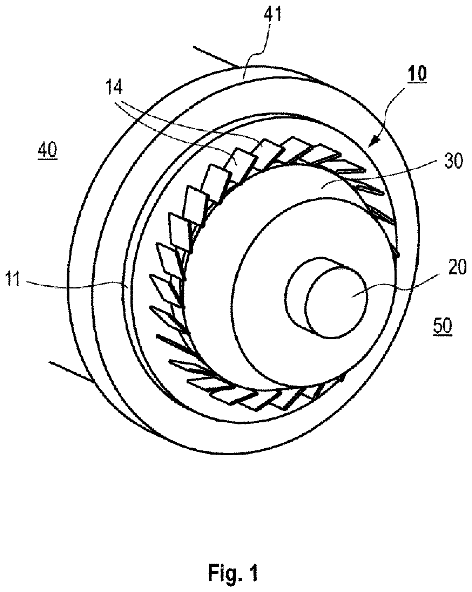

In Figur 1 ist eine schematische isometrische Ansicht eines Düsenrings 10 gemäß hierin beschriebenen Ausführungsformen in einem montierten Zustand gezeigt. Das Turbinenrad 30 einer Radialturbine ist schematisch dargestellt.

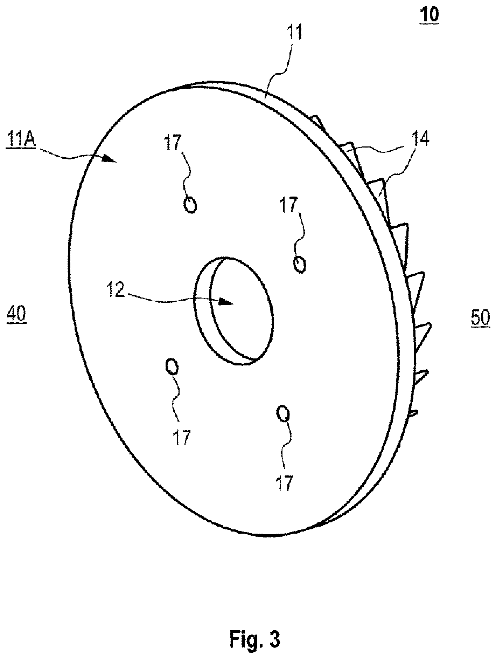

Gemäß hierin beschriebenen Ausführungsformen des Düsenrings umfasst der Düsenring 10 einen rotationssymmetrischen, scheibenförmigen Grundkörper 11 mit einer zentralen Öffnung 12 zum Durchführen einer Welle 20. Wie beispielhaft in Figur 1 gezeigt ist umfasst der Düsenring 10 typischerweise Leitschaufeln 14, die in Umfangsrichtung in einem radial äußeren Bereich des Grundkörpers 11 angeordnet sind. Typischerweise sind die Leitschaufeln 14 derart angeordnet und ausgebildet um Abgase auf Laufschaufeln eines Turbinenrads 30 zu leiten. Insbesondere erstrecken sich die Leitschaufeln 14 vom Grundkörper 11 in axialer Richtung, wobei sie integral mit dem Grundkörper ausgebildet sind. Wie aus Figur 1 ersichtlich ist, ist der Grundkörper 11 des hierin beschriebenen Düsenrings ausgebildet, um im montierten Zustand ein Hitzeschild zwischen einem Lagerraum 40 eines Lagergehäuses 41 und einem Turbinenraum 50 zu bilden. Der Grundkörper 11 des Düsenrings erstreckt sich von der zentralen Öffnung 12 radial nach Außen, wie es beispielhaft in den Figuren 3 bis 5 dargestellt ist. Insbesondere ist der Grundkörper des Düsenrings derart ausgebildet, dass (abgesehen von den Bohrungen 17) eine geschlossene Fläche zwischen der zentralen Öffnung 12 und dem äußeren Rand des Grundkörpers bereitgestellt wird.

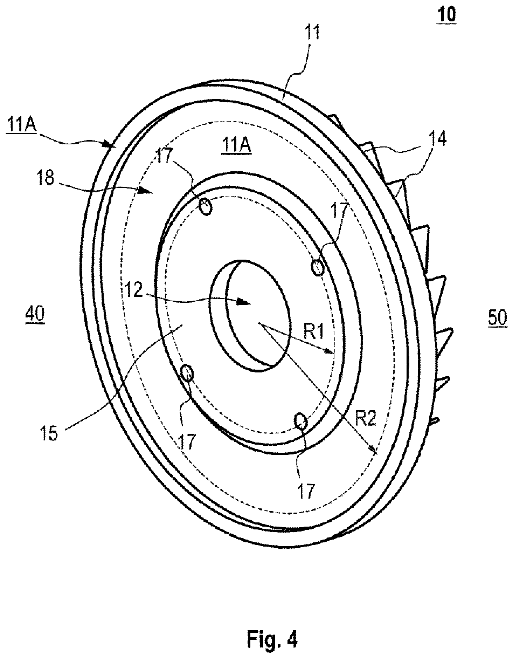

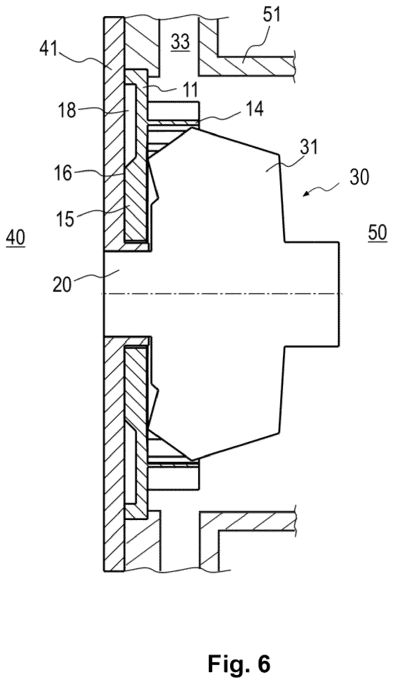

Eine Lagergehäuseseite 11A des Grundkörpers 11 umfasst eine oder mehrere Ausnehmungen 18, um im montierten Zustand des Düsenrings 10 einen oder mehrere luftgefüllte Isolationsräume zu bilden, wie es beispielsweise in Figur 4 dargestellt ist. Der Düsenring umfasst einen Befestigungsflansch 15, der in einem radial inneren Bereich des Grundkörpers 11 angeordnet ist. Der Befestigungsflansch 15 weist eine Kontaktfläche 16 zur Auflage auf einer korrespondierenden Kontaktfläche des Lagergehäuses 41 auf, wie es beispielhaft in Figur 6 gezeigt ist. Der Befestigungsflansch 15 umfasst eine oder mehrere in Umfangsrichtung angeordnete Bohrungen 17 zur Aufnahme von einem oder mehreren Befestigungsmitteln, um den Düsenring am Lagergehäuse zu montieren. Der scheibenförmige Grundkörper 11 des Düsenrings erstreckt sich von der zentralen Öffnung 12 radial nach außen bis zum radial äußeren Bereich in dem die Leitschaufeln 14 angeordnet sind. Der radial äußere Bereich umfasst die Ausnehmungen 18. Die Leitschaufeln 14 sind im Bereich der Ausnehmungen 18 integral mit dem scheibenförmigen Grundkörper (11) ausgebildet.

Somit wird vorteilhafterweise ein Düsenring mit integriertem Hitzeschild bereitgestellt, so dass sich die Anzahl an Schnittstellen/Fugen im Bereich montierten Düsenrings verringert. Ferner wird durch die Ausgestaltung des sich von der zentralen Öffnung radial nach Außen erstreckenden Grundkörpers des Düsenrings eine Freimachung/Freistellung der Rückwandgeometrie der Turbinenwelle ermöglicht da diese im Düsenring integriert werden kann. Damit sind keine unterschiedlichen Lagergehäusevarianten notwendig.

Darüber hinaus wird ein Düsenring bereitgestellt, dessen Fixierung vorteilhafterweise außerhalb des Klemmverbundes "Lagergehäuse/ Turbinengehäuse" erfolgen kann, beispielsweise durch Befestigung mittels temperaturbeständiger Schrauben am Lagergehäuse, wie es im Folgenden beschrieben ist.

Wie es beispielhaft in den Figuren 3, 4, und 5 gezeigt ist, umfasst der Düsenring 10, insbesondere der Grundkörper des Düsenrings, gemäß hierin beschriebenen Ausführungsformen eine oder mehrere in Umfangsrichtung angeordnete Bohrungen 17, die zur Aufnahme von einem oder mehreren Befestigungsmitteln geeignet sind, um den Düsenring am Lagergehäuse zu montieren. Beispielsweise können die Befestigungsmittel Stifte, Bolzen, Schrauben oder dergleichen sein. Typischerweise sind die Befestigungsmittel hitzebeständig.

Demnach kann der hierin beschriebenen Düsenring vorteilhafter Weise in einem zentralen Bereich um die Turbinenwelle herum an dem Lagergehäuse befestigt werden, so dass eine thermische Ausdehnung des Düsenrings durch eine relativ weit Innen liegende Befestigung vorteilhafterweise wenig beeinflusst wird. Ferner hat die hierein beschriebene Befestigung des Düsenrings den Vorteil, dass die Befestigungselemente für den Düsenring nicht im Bereich der Hauptströmung liegen.

Gemäß einer Ausführungsform, die mit anderen hierin beschriebenen Ausführungsformen kombiniert werden kann, ist der Befestigungsflansch 15 ein integraler Bestandteil des Grundkörpers 11. Dies führt vorteilhafterweise zu einer Reduktion an Bauteilkomponenten.

Darüber hinaus kann der Düsenring, alternativ oder zusätzlich zu einer zentralen Befestigung (z.B. mittels eines hierein beschriebenen Befestigungsflanschs und entsprechenden Befestigungsmitteln), derart ausgelegt sein, dass sich der Düsenring im montierten Zustand unter Temperatur axial zwischen Lagergehäuse 40 und Turbinengehäuse und/oder radial im Lagergehäuse 40 und/oder radial im Turbinengehäuse verklemmt.

Somit kann eine verbesserte Verbindung des Düsenrings im montierten Zustand zu den entsprechenden Kontaktflächen bereitgestellt werden, insbesondere hinsichtlich Verformung (unter Temperatureinfluss) und Gasdichtheit, da der Düsenring vorteilhafterweise axial wie eine Tellerfeder leicht am Lagergehäuse vorgespannt werden kann. Somit kann durch die Verwendung des hierin beschriebenen Düsenrings vorteilhafterweise eine zusätzliche "Containment"-Schnittstelle als auch eine zusätzliche Schnittstelle, die die Gasdichtheit nach außen beeinflussen würde, vermieden werden.

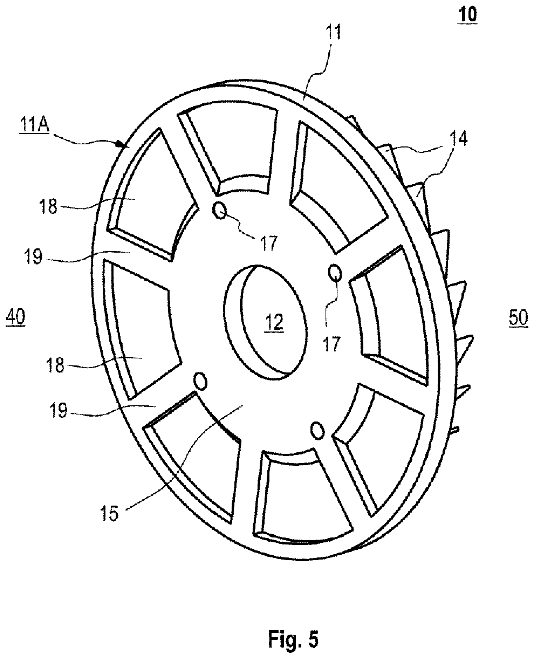

Gemäß einer Ausführungsform, die mit anderen hierin beschriebenen Ausführungsformen kombiniert werden kann, kann die eine oder mehreren Ausnehmungen 18 sich in radialer Richtung erstreckende Rippen 19 umfassen, wie es beispielhaft in Figur 5 dargestellt ist. Derartige Rippen können sich vorteilhaft auf die Stabilität als auch auf das thermische Ausdehnungsverhalten des Düsenrings auswirken.

Gemäß einer Ausführungsform, die mit anderen hierin beschriebenen Ausführungsformen kombiniert werden kann, können die Bohrungen 17 im Befestigungsflansch auf einer ersten virtuellen Kreislinie mit einem ersten Radius R1 um die zentralen Öffnung 12 herum angeordnet sein. Fernern können die Leitschaufeln 14 auf einer zweiten virtuellen Kreislinie mit einem zweiten Radius R2 um die zentralen Öffnung 12 herum angeordnet sein. Typischerweise ist der zweite Radius R2 größer als der erste Radius R1, beispielsweise kann der zweite Radius R2 ≥ 1.5×R1 sein.

Die Bohrungen 17 zur Aufnahme von einem oder mehreren Befestigungsmitteln im Befestigungsflansch können in regelmäßigen oder unregelmäßigen Winkelabständen um die zentrale Öffnung 12 herum angeordnet sein. Eine regelmäßige Unordnung kann beispielsweise den Vorteil einer verbesserten kraftschlüssigen Befestigung des Düsenrings am Lagergehäuse haben.

Ferner sei darauf hingewiesen, dass der hierin beschriebene Düsenring auch ein geschlossener Düsenring sein kann. Beispielsweise kann der Düsenring an einer der Grundkörper 11 gegenüberliegenden Seite eine weitere angeordnete Scheibe aufweisen, die mit den Leitschaufeln 14 verbunden ist. Insbesondere kann die weitere angeordnete Scheibe konfiguriert sein um ein weiteres Hitzeschild bereitzustellen.

Gemäß einer Ausführungsform, die mit anderen hierin beschriebenen Ausführungsformen kombiniert werden kann, kann ein radial außenliegender Bereich des Grundkörpers eine oder mehrere Zentrierungsnocken aufweisen (nicht dargestellt), welche entlang des Umfangs der des Grundkörpers verteilt angeordnet sind. Derartige Zentrierungsnocken können beispielsweise in entsprechende Nuten im Turbinengehäuse eingreifen, wodurch sich eine radiale Führung des Turbinengehäuses bezüglich des Grundkörpers des Düsenrings ergibt. Beispielsweise kann der aufgrund der Zentriernocken entsprechend ausgerichtete Grundkörper des Düsenrings in axialer Richtung in das Turbinengehäuse geschoben werden. Im Betriebszustand dehnt sich Grundkörper des Düsenrings in radialer Richtung aus, und der äußere Rand des Grundkörpers des Düsenrings wird gegen eine entsprechende Auflage des Turbinengehäuses gepresst wodurch eine Zentrierung des Turbinengehäuses zum Lagergehäuse ermöglicht wird.

Wie aus den hierin beschriebenen Ausführungsformen hervorgeht wird durch die hierin beschriebenen Ausführungsformen ein Düsenring bereitgestellt, der in vorteilhafterweise für einen Abgasturbolader verwendet werden kann, so dass die die Positionierung der Düsenringschaufeln sowie das Einbringen von unterschiedlichen Turbinenrückwand-Geometrien unabhängig vom verwendeten Klemmverbund und/oder einer bestehenden Heisszentrierung/Abdichtung ist/sind.

Wie hierin beschrieben, kann der Hitzeschild geometrisch in einen offenen Düsenring als Verlängerung der Lagergehäuseseitigen Düsenringplatte integriert sein. Diese Düsenringplatte (hierein auch als Grundkörper bezeichnet) wird hierbei von der Dimension so ausgeführt, dass der Rückraum des Turbinenkopfes bis hin zum Übergang der Wellennabe abgedeckt wird. Somit ist die Integration von unterschiedlichen Turbinen Rückwänden möglich und es ist nur ein Spezifikationsteil erforderlich. Die Düsenringschaufeln sind integral mit der Düsenringplatte ausgebildet und können beispielsweise zerspanend oder mittels Präzisionsguss erstellt werden.

Wie hierin beschrieben, kann der Düsenring mittels Befestigungsmitteln, z.B. Schrauben, hinter dem Turbinenkopf (Turbinenkopfrückraum) auf einem relativ kleinen Durchmesser befestigt werden. Somit befindet sich der Düsenring außerhalb des Klemmverbundes Turbinengehäuse/Lagergehäuse und die Befestigungsmittel befinden sich in einem für die Skalierung des Turbinenkopfes/ der Düsenringschaufeln unkritischen Bereich. Durch Entfernen des Düsenrings aus dem Klemmverbund entsteht auch ein positiver Effekt bei der Betrachtung des Containments und der Gasdichtheit, da die Anzahl Schnittstellen im Klemmverbund reduziert werden.

Durch diese Art der Montage kann der Düsenring, insofern erforderlich, auch leicht vorgespannt eingebaut werden (Prinzip Tellerfeder). Mit dieser Maßnahme kann einer thermischen Deformation entgegen gewirkt werden. Dies unterstützt auch gegebenenfalls die Unterbindung eines "internen Gas-Beipass" hinter dem Düsenring.

In Figur 6 ist eine schematische Schnittansicht eines Ausschnitts eines Abgasturboladers 60 gemäß hierin beschriebenen Ausführungsformen dargestellt. Typischerweise umfasst der Abgasturbolader 60 ein Turbinengehäuse 51, eine in einem Lagergehäuse 41 gelagerte Welle 20. Auf der Welle 20 ist ein Turbinenrad 30 mit Laufschaufeln 31 angeordnet. Ferner weist der Abgasturbolader typischerweise einen Einströmkanal 33 für Abgase auf, der im Turbinengehäuse 51, stromauf des Turbinenrades 30 ausgebildet ist. Ferner, weist der Abgasturbolader einen Düsenring 10 gemäß einer der hierin beschrieben Ausführungsformen auf, wie es schematisch in Figur 6 dargestellt ist. Insbesondere ist der Düsenring 10 derart ausgelegt, dass der Düsenring im montierten Zustand zwischen dem Lagergehäuse 41 und dem Turbinengehäuse 51 des Abgasturboladers axial gehalten wird. Der Düsenring 10 ist über einen Befestigungsflansch 15 mittels hitzebeständiger Befestigungsmittel 15A an dem Lagergehäuse 41 befestigt. Insbesondere können die hitzebeständigen Befestigungsmittel 15A hitzebeständige Schrauben sein, mit welchen und der Düsenring 10 mit dem Lagergehäuse 41 verschraubt ist.

Als alternative oder zusätzliche Montagemöglichkeit des Düsenrings im Abgasturbolader können der Düsenring 10 und das Lagergehäuse 41 derart ausgelegt sein, dass der Düsenring im montierten Zustand zwischen Lagergehäuse und Turbinengehäuse tellerfederartig axial eingespannt ist.

Ferner können der Düsenring 10 und das Lagergehäuse 41, als alternative oder zusätzliche Montagemöglichkeit des Düsenrings im Abgasturbolader, derart ausgelegt sein, dass sich der Düsenring 10 im montierten Zustand unter Temperatur, d.h. Hitze, axial zwischen Lagergehäuse 41 und Turbinengehäuse und/oder radial im Lagergehäuse 41 und/oder im Turbinengehäuse 51 verklemmt.

Darüber hinaus können eine oder mehrere Verdrehsicherung(en) für den Düsenring vorgesehen sein. Beispielsweise können der Düsenring 10 und das Lagergehäuse 41 derart ausgelegt sein, dass für den Düsenring im montierten Zustand eine oder mehrere Verdrehsicherung(en) zwischen dem Düsenring 10 und dem Lagergehäuse 41 oder zwischen dem Düsenring 10 und dem Turbinengehäuse 51 bereitgestellt werden. Die eine oder mehrere Verdrehsicherung(en) können beispielsweise mittels form/kraftschlüssigen Verbindungen zwischen Düsenring und Lagergehäuse ausgeführt sein. Alternativ oder zusätzlich können eine oder mehrere Verdrehsicherung(en), beispielsweise mittels form/kraftschlüssigen Verbindungen, zwischen Düsenring und Turbinengehäuse ausgeführt sein. Dies kann insbesondere von Vorteil sein, wenn der Düsenring nicht an dem Lagergehäuse befestigt ist, sondern zwischen Lagergehäuse und Turbinengehäuse tellerfederartig axial eingespannt ist.

### BEZUGZEICHENLISTE

- 10: Düsenring
- 11: Grundkörper
- 11A: Lagergehäuseseite des Grundkörpers
- 12: zentrale Öffnung
- 14: Leitschaufeln
- 15: Befestigungsflansch
- 15A: Befestigungsmittel
- 16: Kontaktfläche
- 17: Bohrungen
- 20: Welle
- 30: Turbinenrad
- 31: Laufschaufeln
- 40: Lagerraum
- 41: Lagergehäuse
- 50: Turbinenraum
- 51: Turbinengehäuse
- 60: Abgasturbolader

## Patentansprüche

1. Düsenring (10) für eine Radialturbine, umfassend:
- einen rotationssymmetrischen, scheibenförmigen Grundkörper (11) mit einer zentralen Öffnung (12) zum Durchführen einer Welle (20),
- Leitschaufeln (14), die in Umfangsrichtung in einem radial äußeren Bereich des Grundkörpers (11) angeordnet und ausgebildet sind um Abgase auf Laufschaufeln (31) eines Turbinenrads (30) zu leiten, wobei sich die Leitschaufeln (14) vom Grundkörper (11) in axialer Richtung erstrecken,
wobei der Grundkörper (11) ausgebildet ist um im montierten Zustand ein Hitzeschild zwischen einem Lagerraum (40) eines Lagergehäuses (41) und einem Turbinenraum (50) zu bilden, wobei eine Lagergehäuseseite (11A) des Grundkörpers (11) eine oder mehrere Ausnehmungen (18) umfasst, um im montierten Zustand des Düsenrings (10) einen oder mehrere luftgefüllte Isolationsräume zu bilden,
wobei der Düsenring einen Befestigungsflansch (15) umfasst, der in einem radial inneren Bereich des Grundkörpers (11) angeordnet ist, und wobei der Befestigungsflansch (15) eine Kontaktfläche (16) zur Auflage auf einer korrespondierenden Kontaktfläche des Lagergehäuses (41) aufweist, und
wobei der Befestigungsflansch (15) eine oder mehrere in Umfangsrichtung angeordnete Bohrungen (17) zur Aufnahme von einem oder mehreren Befestigungsmitteln umfasst, um den Düsenring am Lagergehäuse zu montieren,
**dadurch gekennzeichnet,**
**dass** sich der scheibenförmige Grundkörper (11) des Düsenrings von der zentralen Öffnung (12) radial nach außen erstreckt bis zum radial äußeren Bereich in dem die Leitschaufeln (14) angeordnet sind, und dass der radial äußere Bereich die Ausnehmungen (8) umfasst, und dass die Leitschaufeln (14) im Bereich der Ausnehmungen integral mit dem scheibenförmigen Grundkörper (11) ausgebildet sind.

2. Düsenring (10) nach Anspruch 1, wobei der Befestigungsflansch (15) ein integraler Bestandteil des Grundkörpers (11) ist.

3. Düsenring (10) nach einem der Ansprüche 1 bis 2, wobei der Düsenring (10) derart ausgelegt ist, dass sich der Düsenring im montierten Zustand unter Temperatur axial zwischen Lagergehäuse (40) und Turbinengehäuse und/oder radial im Lagergehäuse (40) und/oder radial im Turbinengehäuse verklemmt.

4. Düsenring (10) nach einem der Ansprüche 1 bis 3, wobei die eine oder mehreren Ausnehmung (18) Rippen (19) umfassen, die sich in radialer Richtung erstrecken.

5. Düsenring (10) nach einem der Ansprüche 1 bis 4, wobei die Bohrungen (17) im Befestigungsflansch auf einer ersten virtuellen Kreislinie mit einem ersten Radius R1 um die zentralen Öffnung (12) herum angeordnet sind, und wobei die Leitschaufeln (14) auf einer zweiten virtuellen Kreislinie mit einem zweiten Radius R2 um die zentralen Öffnung (12) herum angeordnet sind, wobei der zweiten Radius R2 ≥ 1.5×R1 ist.

6. Düsenring (10) nach einem der Ansprüche 1 bis 5, wobei die Bohrungen (17) zur Aufnahme der Befestigungsmittel im Befestigungsflansch in regelmäßigen Winkelabständen um die zentrale Öffnung (12) herum angeordnet sind.

7. Düsenring (10) nach einem der Ansprüche 1 bis 6, wobei an einer dem Grundkörper (11) gegenüberliegenden Seite eine weitere Scheibe angeordnet ist, die mit den Leitschaufeln (14) verbunden ist.

8. Abgasturbolader (60), umfassend:
- ein Turbinengehäuse (51),
- eine in einem Lagergehäuse (40) gelagerte Welle (20), auf der ein Turbinenrad (30) mit Laufschaufeln (31) angeordnet ist,
- einen Einströmkanal (33) für Abgase, der im Turbinengehäuse (51), stromauf des Turbinenrades (30) ausgebildet ist, und
- einen Düsenring (10) nach einem der Ansprüche 1 bis 7, wobei der Düsenring (10) derart ausgelegt ist, dass der Düsenring im montierten Zustand zwischen dem Lagergehäuse (41) und dem Turbinengehäuse (51) des Abgasturboladers (60) axial gehalten wird, wobei der Düsenring über den Befestigungsflansch (15) mittels hitzebeständiger Befestigungsmittel (15A) an dem Lagergehäuse (41) befestigt ist.

9. Abgasturbolader (60) nach Anspruch 8, wobei die hitzebeständigen Befestigungsmittel (15A) hitzebeständige Schrauben sind und der Düsenring (10) mit dem Lagergehäuse (41) verschraubt ist.

10. Abgasturbolader (60) nach einem der Ansprüche 8 bis 9, wobei der Düsenring (10) und das Lagergehäuse (41) derart ausgelegt sind, so dass der Düsenring (10) im montierten Zustand zwischen Lagergehäuse (41) und Turbinengehäuse (51) tellerfederartig axial eingespannt ist.

11. Abgasturbolader (60) nach einem der Ansprüche 8 bis 10, wobei der Düsenring (10) und das Lagergehäuse (41) derart ausgelegt sind, dass sich der Düsenring im montierten Zustand unter Temperatur axial zwischen Lagergehäuse (41) und Turbinengehäuse und/oder radial im Lagergehäuse (41) und/oder im Turbinengehäuse (51) verklemmt.

12. Abgasturbolader (60) nach einem der Ansprüche 8 bis 11, wobei für den Düsenring (10) eine oder mehrere Verdrehsicherung(en) bereitgestellt sind zwischen dem Düsenring (10) und dem Lagergehäuse (41) oder zwischen dem Düsenring (10) und dem Turbinengehäuse (51).

## Claims

1. Nozzle ring (10) for a radial turbine, comprising:
- a rotationally symmetrical, disc-shaped main body (11) with a central opening (12) for the leadthrough of a shaft (20),
- guide blades (14) which are arranged in a circumferential direction in a radially outer region of the main body (11) and which are designed to direct exhaust gases onto rotor blades (31) of a turbine wheel (30), wherein the guide blades (14) extend from the main body (11) in an axial direction,
wherein the main body (11) is designed to form in the installed state a heat shield between a bearing space (40) of a bearing housing (41) and a turbine space (50), wherein a bearing housing side (11A) of the main body (11) comprises one or more recesses (18) in order to form in the installed state of the nozzle ring (10) one or more air-filled insulation spaces,
wherein the nozzle ring comprises a fastening flange (15) which is arranged in a radially inner region of the main body (11), and wherein the fastening flange (15) has a contact surface (16) for support on a corresponding contact surface of the bearing housing (41), and
wherein the fastening flange (15) comprises one or more bores (17) which are arranged in a circumferential direction and which serve for receiving one or more fastening means in order to install the nozzle ring on the bearing housing,
**characterized**
**in that** the disc-shaped main body (11) of the nozzle ring extends radially outwards from the central opening (12) up to the radially outer region in which the guide blades (14) are arranged, and in that the radially outer region comprises the recesses (8), and in that the guide blades (14) are formed integrally with the disc-shaped main body (11) in the region of the recesses.

2. Nozzle ring (10) according to Claim 1, wherein the fastening flange (15) is an integral constituent part of the main body (11).

3. Nozzle ring (10) according to either of Claims 1 and 2, wherein the nozzle ring (10) is designed such that the nozzle ring in the installed state, under the action of temperature, becomes clamped axially between the bearing housing (40) and the turbine housing and/or radially in the bearing housing (40) and/or radially in the turbine housing.

4. Nozzle ring (10) according to one of Claims 1 to 3, wherein the one or more recesses (18) comprise ribs (19) which extend in a radial direction.

5. Nozzle ring (10) according to one of Claims 1 to 4, wherein the bores (17) are arranged in the fastening flange on a first virtual circular line with a first radius R1 around the central opening (12), and wherein the guide blades (14) are arranged on a second virtual circular line with a second radius R2 around the central opening (12), wherein the second radius R2 ≥ 1.5 × R1.

6. Nozzle ring (10) according to one of Claims 1 to 5, wherein the bores (17) for receiving the fastening means are arranged in the fastening flange at regular angular intervals around the central opening (12).

7. Nozzle ring (10) according to one of Claims 1 to 6, wherein, on a side situated opposite the main body (11), a further disc is arranged, which is connected to the guide blades (14).

8. Exhaust-gas turbocharger (60), comprising:
- a turbine housing (51),
- a shaft (20) which is mounted in a bearing housing (40) and on which a turbine wheel (30) with rotor blades (31) is arranged,
- an inflow channel (33) for exhaust gases, which is formed in the turbine housing (51) upstream of the turbine wheel (30), and
- a nozzle ring (10) according to one of Claims 1 to 7, wherein the nozzle ring (10) is designed such that the nozzle ring in the installed state is held axially between the bearing housing (41) and the turbine housing (51) of the exhaust-gas turbocharger (60), wherein the nozzle ring is fastened by way of the fastening flange (15) to the bearing housing (41) by heat-resistant fastening means (15A).

9. Exhaust-gas turbocharger (60) according to Claim 8, wherein the heat-resistant fastening means (15A) are heat-resistant screws, and the nozzle ring (10) is screwed to the bearing housing (41).

10. Exhaust-gas turbocharger (60) according to either of Claims 8 and 9, wherein the nozzle ring (10) and the bearing housing (41) are designed such that the nozzle ring (10) in the installed state is axially braced in the manner of a plate spring between the bearing housing (41) and the turbine housing (51).

11. Exhaust-gas turbocharger (60) according to one of Claims 8 to 10, wherein the nozzle ring (10) and the bearing housing (41) are designed such that the nozzle ring in the installed state, under the action of temperature, becomes clamped axially between the bearing housing (41) and the turbine housing and/or radially in the bearing housing (41) and/or in the turbine housing (51).

12. Exhaust-gas turbocharger (60) according to one of Claims 8 to 11, wherein, for the nozzle ring (10), one or more rotation prevention means is or are provided between the nozzle ring (10) and the bearing housing (41) or between the nozzle ring (10) and the turbine housing (51).

## Revendications

1. Anneau de buses (10) pour une turbine radiale, comprenant :
- un corps de base (11) en forme de disque à symétrie de révolution avec une ouverture centrale (12) pour le passage d'un arbre (20),
- des aubes directrices (14) qui sont agencées dans la direction circonférentielle dans une zone radialement extérieure du corps de base (11) et qui sont conçues pour diriger les gaz d'échappement sur des aubes mobiles (31) d'une roue de turbine (30), les aubes directrices (14) s'étendant depuis le corps de base (11) dans la direction axiale,
le corps de base (11) étant conçu pour former, à l'état assemblé, un bouclier thermique entre un espace de palier (40) d'un boîtier de palier (41) et un espace de turbine (50), un côté (11A) de boîtier de palier du corps de base (11) comprenant un ou plusieurs évidements (18) pour former, à l'état assemblé de l'anneau de buses (10), un ou plusieurs espaces d'isolation remplis d'air,
l'anneau de buses comprenant une bride de fixation (15) qui est agencée dans une zone radialement intérieure du corps de base (11), et la bride de fixation (15) présentant une surface de contact (16) pour un appui sur une surface de contact correspondante du boîtier de palier (41), et
la bride de fixation (15) comprenant un ou plusieurs alésages (17) agencés dans la direction circonférentielle pour recevoir un ou plusieurs moyens de fixation, afin de monter l'anneau de buses sur le boîtier de palier,
**caractérisé en ce que**
le corps de base (11) en forme de disque de l'anneau de buses s'étend radialement vers l'extérieur depuis l'ouverture centrale (12) jusqu'à la zone radialement extérieure dans laquelle sont agencées les aubes directrices (14), et **en ce que** la zone radialement extérieure comprend les évidements (8), et **en ce que** les aubes directrices (14) sont réalisées d'un seul tenant avec le corps de base (11) en forme de disque dans la zone des évidements.

2. Anneau de buses (10) selon la revendication 1, dans lequel la bride de fixation (15) est une partie intégrante du corps de base (11).

3. Anneau de buses (10) selon l'une des revendications 1 à 2, l'anneau de buses (10) étant conçu de telle sorte qu'à l'état assemblé, l'anneau de buses soit bloqué sous l'effet de la température, axialement entre le boîtier de palier (40) et le boîtier de turbine et/ou radialement dans le boîtier de palier (40) et/ou radialement dans le boîtier de turbine.

4. Anneau de buses (10) selon l'une des revendications 1 à 3, dans lequel le ou les évidements (18) comprennent des nervures (19) s'étendant dans la direction radiale.

5. Anneau de buses (10) selon l'une des revendications 1 à 4, dans lequel les alésages (17) dans la bride de fixation sont agencés sur une première ligne circulaire virtuelle avec un premier rayon R1 autour de l'ouverture centrale (12), et dans lequel les aubes directrices (14) sont agencées sur une deuxième ligne circulaire virtuelle avec un deuxième rayon R2 autour de l'ouverture centrale (12), le deuxième rayon R2 étant ≥ 1.5×R1.

6. Anneau de buses (10) selon l'une des revendications 1 à 5, dans lequel les alésages (17) destinés à recevoir les moyens de fixation dans la bride de fixation sont agencés à intervalles angulaires réguliers autour de l'ouverture centrale (12).

7. Anneau de buses (10) selon l'une des revendications 1 à 6, dans lequel un autre disque est agencé sur une face opposée au corps de base (11), ce disque étant relié aux aubes directrices (14).

8. Turbocompresseur (60) pour gaz d'échappement, comprenant :
- un boîtier de turbine (51),
- un arbre (20) logé dans un boîtier de palier (40), sur lequel est agencée une roue de turbine (30) avec des aubes mobiles (31),
- un canal d'admission (33) pour les gaz d'échappement, qui est formé dans le boîtier de turbine (51), en amont de la roue de turbine (30), et
- un anneau de buses (10) selon l'une des revendications 1 à 7, l'anneau de buses (10) étant conçu de telle sorte que l'anneau de buses est maintenu axialement à l'état assemblé entre le boîtier de palier (41) et le boîtier de turbine (51) du turbocompresseur (60) pour gaz d'échappement, l'anneau de buses étant fixé au boîtier de palier (41) par l'intermédiaire de la bride de fixation (15) en utilisant des moyens de fixation (15A) résistant à la chaleur.

9. Turbocompresseur (60) pour gaz d'échappement selon la revendication 8, dans lequel les moyens de fixation (15A) résistants à la chaleur sont des vis résistantes à la chaleur et l'anneau de buses (10) est vissé sur le boîtier de palier (41).

10. Turbocompresseur (60) pour gaz d'échappement selon l'une des revendications 8 à 9, dans lequel l'anneau de buses (10) et le boîtier de palier (41) sont conçus de telle sorte que l'anneau de buses (10) soit serré axialement à la manière d'une rondelle à ressort entre le boîtier de palier (41) et le boîtier de turbine (51) à l'état assemblé.

11. Turbocompresseur (60) pour gaz d'échappement selon l'une des revendications 8 à 10, dans lequel l'anneau de buses (10) et le boîtier de palier (41) sont conçus de telle sorte qu'à l'état assemblé, sous l'effet de la température, l'anneau de buses soit bloqué axialement entre le boîtier de palier (41) et le boîtier de turbine et/ou radialement dans le boîtier de palier (41) et/ou dans le boîtier de turbine (51).

12. Turbocompresseur (60) pour gaz d'échappement selon l'une des revendications 8 à 11, dans lequel un ou plusieurs dispositifs anti-rotation sont prévus pour l'anneau de buses (10) entre l'anneau de buses (10) et le boîtier de palier (41) ou entre l'anneau de buses (10) et le boîtier de turbine (51).
